Europäisches Patentamt

**European Patent Office**

**Office européen des brevets**

(19)

(11) Publication number: **0 117 640**
A2

# EUROPEAN PATENT APPLICATION

(12)

(21) Application number: **84300519.0**

(22) Date of filing: **27.01.84**

(51) Int. Cl.³: **F 16 K 11/085**

(30) Priority: **28.01.83 CA 420505**

(71) Applicant: **Breda, Silvano, 81 Apricot Street, Thornhill Ontario (CA)**

(43) Date of publication of application: **05.09.84 Bulletin 84/36**

(72) Inventor: **Breda, Silvano, 81 Apricot Street, Thornhill Ontario (CA)**

(74) Representative: **Brown, David Alan et al, MATHYS & SQUIRE 10 Fleet Street, London EC4Y 1AY (GB)**

(84) Designated Contracting States: **FR GB IT**

(54) **Diverter valve with integral backflow preventer.**

(57) . A diverter valve is provided with an integral backflow preventer in the form of a vacuum breaker. In one embodiment, a diverter valve, for example for a bath, comprises a body (38) having a lower opening (40) for connection to a water supply and two outlet openings (42, 44). A tube (70) fits into the body (38) and is rotatable to allow a lateral opening (72) in the tube to be selectively aligned with one or other of the outlets (42, 44). Water supplied through the inlet (40) flows through an inner tube (66) to a chamber (48) defined between the two tubes (66, 70) and thence through opening (72) in the outer tube (70). When the water supply is cut off, a float valve (106) closes the top of the inner tube (66) and the chamber (48) is in communication with the atmosphere through an air port (103) in a cap (80) fixed to the top of the outer tube (70). When water flows through the inlet (40) the valve (106) is raised to open the inner tube (66) and to close the air port (103). An alternative embodiment for use in a bidet is described, and other applications of the valve are mentioned.

FIELD OF INVENTION

This invention relates to a diverter valve with integral backflow preventer in the form of a vacuum breaker.

BACKGROUND OF THE INVENTION

Backflow preventers, each a mechanical device which automatically forestalls the possibility of any unintentional reverse flow in the water distributing system and in one construction comprises a vacuum breaker - a device which, when strategically located in the feed line of the water system, prevents the reverse flow of water by the admission of air, precluding any back siphonage which might occur, (See U.S. Patents 2,303,037 and 3,162,210) - are used in commercial and household installations, for example bidets, Roman Tubs, barber shop and hairdressing salon fixtures, laboratory sinks, food processing facilities, chemical manufacturing and processing facilities, metal plating facilities, just to name a few, to prevent the contamination of the potable water supply. However these installations use the water in different manners and either separate backflow preventers would be required for each use to protect the water supply from contamination or a separate backflow preventer would be installed in the line in advance of the components in the system for diverting the water for the different uses. For example, in a bidet, the water is diverted to the rim and the spray. In a bath tub the water is diverted to the spout, showerhead or removeable handheld shower, and so on. While a number of proposals have been made for the diversion of fluids, (See for example, U.S. Patent 4,312,377) not one structure has been provided which also provides backflow prevention, let alone backflow prevention in a compact, easily manufactured, effective unit.

Particularly in the installation of a bidet, a backflow preventer Model V-360-A Vacuum Breaker manufactured by Sloan Valve Company and a separate diverter valve manufactured by various other manufacturers have been installed with each being serviceable from the outside of the installed fixture. In respect of the installation of a Roman Bath, at the present time, because of the method of installation of faucet and handheld shower, there is no vacuum breaker available for use in such installation and the industry has resorted to the use of a mechanical check valve employing a spring action to close the inlet when the flow of water stops, to overcome this problem. This mechanical check valve has not been approved for such use by the responsible Governmental Authority. To modify existing backflow preventers for use in these installations is not only costly but more importantly, virtually impossible to secure when applied to the installation.

It is therefore an object of this invention, to provide a diverter valve with integral backflow preventer in the form of a vacuum breaker in an integral structure which is entirely reliable and easily serviced.

Further and other objects of the invention will be realized by those skilled in the art from the following summary of the invention and detailed description of preferred embodiments thereof.

## SUMMARY OF THE INVENTION

According to one aspect of the invention, a diverter valve with integral backflow preventer in the form of a vacuum breaker is provided.

According to another aspect of the invention, there is provided a diverter valve with integral backflow preventer in the form of a vacuum breaker comprising a main housing or body, having an integral central chamber portion (preferably a vertically extending symmetrical chamber portion), defined by an internal wall and, vertically directed openings at opposed ends of the housing or body through the housing or body into the central chamber portion, a plurality of laterally directed openings extending from the outer surface of the body through the internal wall of the body, opening into the chamber, an inlet tube in communication with the lowermost of the vertically directed openings and extending a predetermined distance from the lowermost vertically directed opening to an opening (preferably an open end), means between the internal wall defining the chamber and the outer surface of the inlet tube for permitting communication between selected of such laterally directed openings and the inlet tube at a time, a closure reciprocal from a position spaced from the opening in the inlet tube closing the upper end of the diverter valve to the atmosphere, to a position closing the inlet tube opening the upper end of the diverter valve to atmosphere whereby when fluid is fed through the inlet tube into the valve the closure is moved away from the opening in the inlet tube closing the valve to atmosphere to permit the fluid to pass out the opening of the inlet tube into the valve, and when fluid is not passed through the inlet tube, the closure closes the open end of the inlet tube and vents the valve to atmosphere, control means for controlling the means between the internal wall defining the chamber and inlet tube for permitting the lateral selected communication to convey the fluid to the desired opening for discharge and means for mounting the diverter valve with the integral backflow preventer.

According to another aspect of the invention, the means permitting communication between selected of such laterally extending openings may comprise a tube having an outer surface whose dimensions correspond substantially to the inner surface dimensions of the wall defining the chamber to provide an intimate close tolerance fit therebetween, the tube having at least one laterally directed aperture therethrough for communication with only selected of such laterally directed openings in the housing or body at a time.

According to another aspect of the invention, the internal wall defining the chamber is circular and of constant diameter, and the tube is cylindrical in shape.

According to another aspect of the invention, the tube is of greater length than the inlet and housing or body of the valve.

The invention will now be illustrated with reference to drawings of embodiments of the invention.

DESCRIPTION OF THE DRAWINGS

Figure 1 is a perspective rear view of a bidet mounting a diverter valve with integral backflow preventer constructed according to one embodiment of the invention.

Figure 2 is a perspective top view of the bidet shown in Figure 1;

Figure 3 is a cross-sectional view, taken through a diverter valve with integral backflow preventer constructed according to another embodiment of the invention;

Figures 4 and 5 illustrate the operation of part of the valve shown in Figure 3;

Figure 6 is a cross-sectional view of the diverter valve with integral backflow preventer shown in Figures 1 and 2;

Figure 7 is a perspective view of a component part of the valve shown in Figure 6;

Figure 8 is a top view of a portion of the valve shown in Figure 6 illustrating part of its operation;

Figure 9 is an exploded view of component part of the valve shown in Figure 3;

Figure 10 is an assembled perspective view partly in section of the valve shown in Figure 9 with a portion of the assembled valve removed.

## DETAILED DESCRIPTION OF EMBODIMENTS OF THE INVENTION

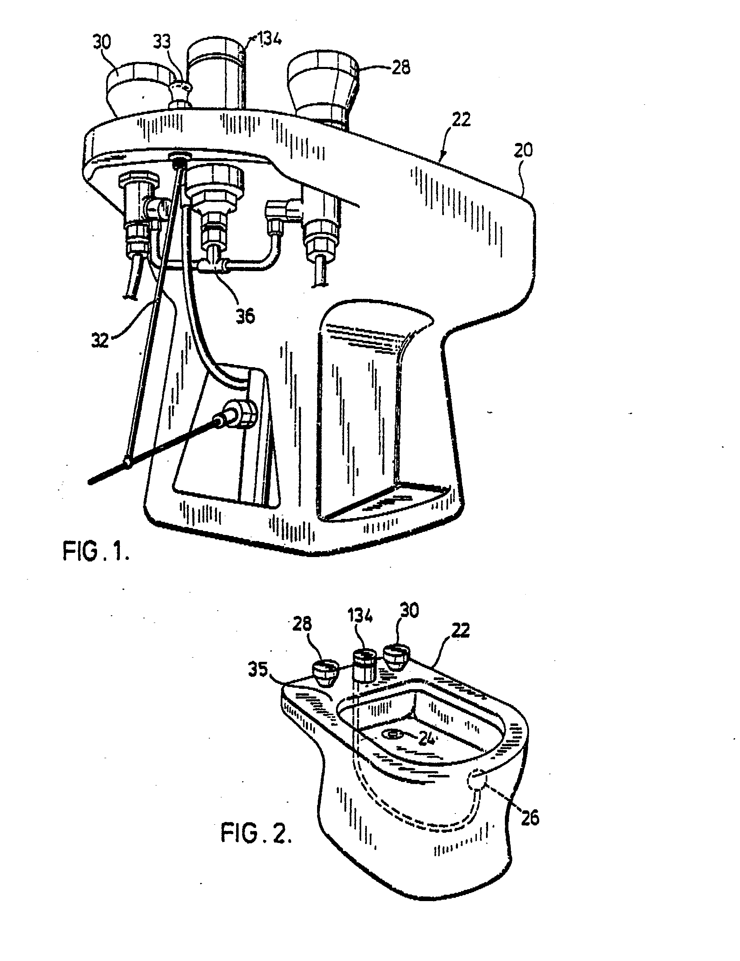

With reference to Figures 1 and 2, there is shown bidet 20, comprising porcelain fixture 22, having drain 24, spray 26, faucets for introducing hot and cold water 28 and 30, pop-up drain control 32 for opening and closing drain 24 by handle 33 and diverter valve 134 with integral backflow preventer secured, to the rim 35 of the bidet 20 and by T-connection 36 to each of the faucets 28 and 30.

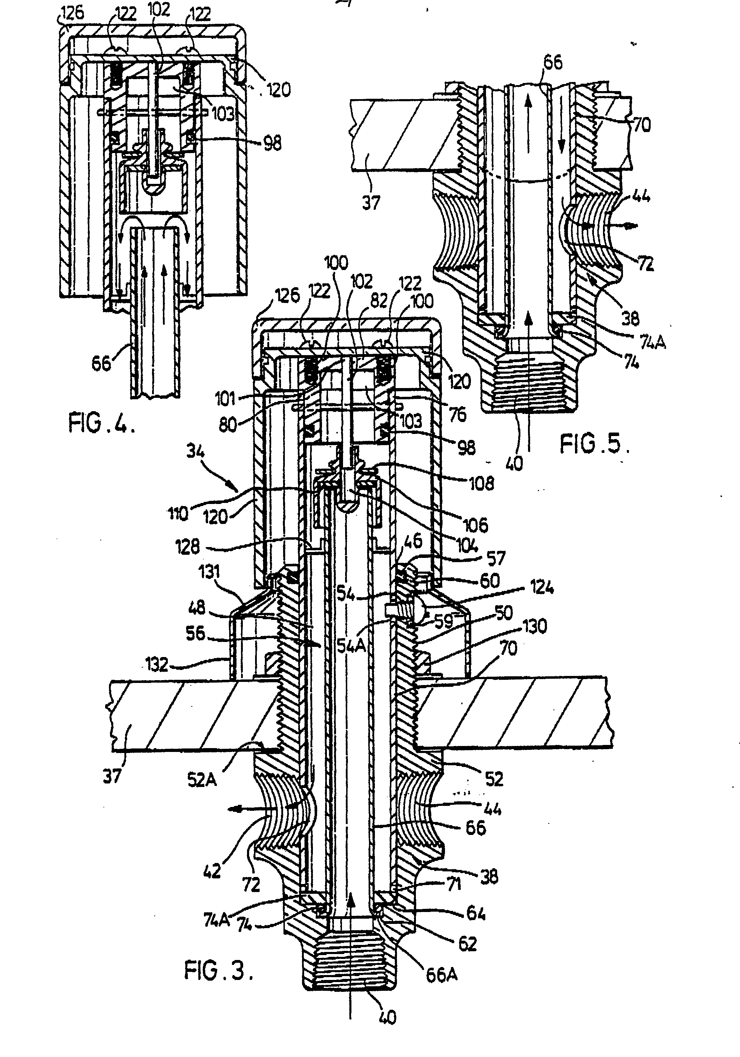

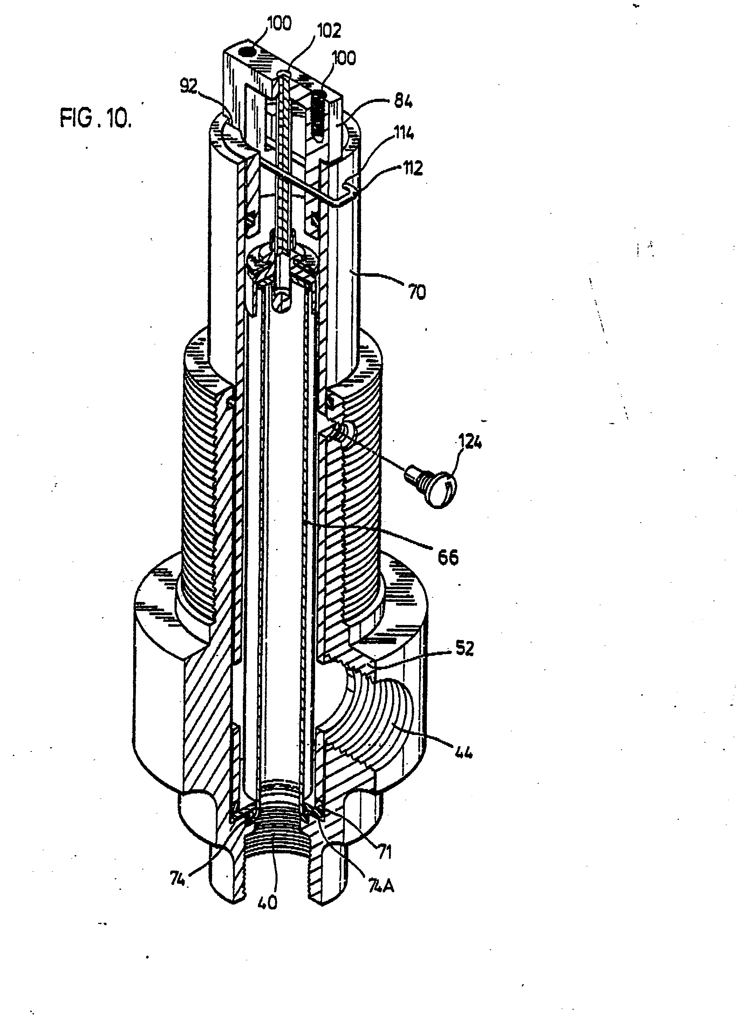

With reference to Figures 3, 4, 5, 9 and 10, another diverter valve 34 with integral backflow preventer in the form of a vacuum breaker is shown in cross-section,mounted on the rim of a Roman Bath 37 and comprises a brass body 38 comprising vertically directed lowermost opening 40, vertically directed upper opening 46, and laterally directed openings 42 and 44 through the sides of body 38,all opening into vertically extending symmetrical chamber portion 48 defined by internal circular wall 56. The exterior of body 38 is threaded at 50. Body 38 also includes radially outwardly extending shoulder rim 52, (providing ledge 52A), screw hole 54 through the threaded portion 50 and circular recess 57 through the radially inner surface of wall 56 to receive "O" ring 60. Proximate the upper extent of opening 40 into chamber 48, body 38 is stepped to provide two ledges 62 and 64, the radially inner edge 62 for supporting axially extending inlet tube 66 spaced from side wall 56 and which inlet tube 66 extends past the upper end of body 38 through opening 46. "O" ring 74 and brass washer 74A are positioned above outwardly flared flange 66A as shown to ensure all fluid passing through opening 40 passes through tube 66.

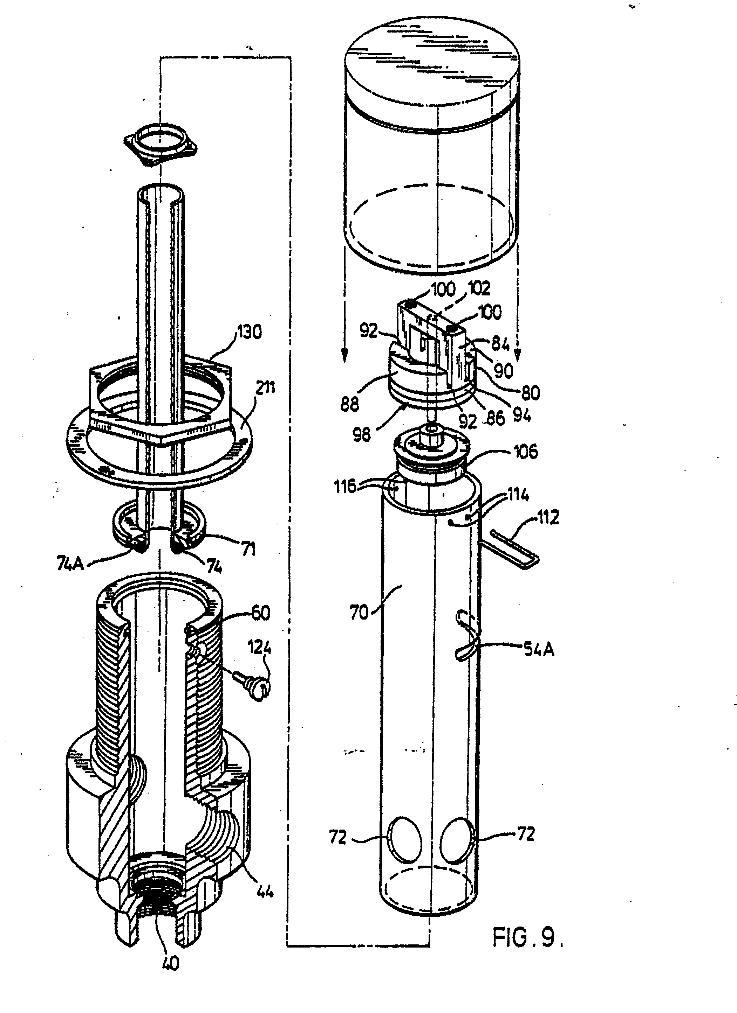

Annular steel tube 70 having substantially the same outer radial dimensions as the radial dimensions of the inner surface of wall 56 to provide an intimate fit between the outer surface of annular tube 70 and wall 56, sits on teflon washer 71 in turn sitting on washer 74A in ledge 64 and carries laterally directed opening 72 therethrough at the same level as openings 42 and 44. Circumferentially elongated aperture 54A (seen best in Figure 9) is provided through tube 70 to align with aperture 54 through body 38 when tube 70 sits on washer 71. Tube 70 is longer than tube 66 and carries at its upper end retainer cap 80 comprising brass casting 82 (see Figure 9) comprising annular portion 86, U-shaped portion 84 cast with annular portion 86 and upstanding arcuate wall formations 88 and 90 also cast with portion 86, each formation 88 and 90 spaced from U-shaped portion 84 by gaps 92 and 94. Annular portion 86 carries "O" ring 98 proximate its lower end. Threaded blind bore holes 100 are provided from the top of U-shaped portion 84 into U-shaped portion 84 and blind bore hole 101 extends downwardly and opens from the underside of a central portion of U-shaped portion 84 through central air port 103. Travelling pin 102 extends downwardly from bore 101 past annular portion 86 through port 103 and extends into blind bore 104 of check valve float 106. Cap 80 of the same radial outer dimensions as the inner dimensions of tube 70, is pushed through end 76 of tube 70 into intimate contact with the inner side wall of tube 70 with "O" ring 98 compressed between brass casting 80 and the interior wall to preclude water passing past the "O" ring

at 98.

Check float valve 106 carries resilient washer 108 at the upper end thereof and downwardly facing annular washer 110 to seat on the upper end of tube 66. The upper end of tube 66 is spaced from the bottom of cap 80 by a distance sufficient to permit washer 110 of float 106 to abut tube 66 closing tube 66 while at the same time spacing resilient washer 108 from the bottom of cap 80 when no fluid passes through opening 40 through tube 66, opening chamber 48 to atmosphere. However when water passes through opening 40 through tube 66, the water forces float 106 upwardly causing washer 108 to abut the bottom of cap 80 sealing compartment 48 from the atmosphere causing all water ejected from tube 66 to pass into the space between tube 70 and tube 66. As is apparent, float 106 at all times travels between the upper end of tube 66 and the bottom of cap 80 controlled on travelling pin 102.

For the purposes of diverting the water passing through tube 66 into the space 48 between tubes 66 and 70, tube 70 carrying laterally directed opening 72, is rotatable to align laterally directed opening 72 with a selected one of openings 42 and 44. To secure tube 70 for rotation, U-shaped pin 112 (See Figure 9) is pushed through apertures 114 in tube 70 to extend through gaps 92 and 94 between U-shaped portion 84 and arcuate raised shoulder formations 88 and 90 and then through opposed pin holes 116 in tube 70. Handle 120 is in turn secured to U-shaped portion 84 by screws 122 threaded into bore holes 100. Therefore, by rotation of handle 120, tube 70 is rotated bringing opening 72 into communication with either opening 42 or 44 directed to, for example, in a Roman Tub the spout of the tub on to the handheld shower. Handle Cap 126 seats over handle 120 covering the retaining screws.

To secure tube 70 to body 38 and permit rotation of tube 70 with respect to body 38, screw 124 is secured through aperture 54 in body 38 and circumferentially elongated aperture 54A. An "O" ring 59 is positioned radially inwardly of screws 124. Spacers 128 (like spokes) space tube 66 from tube 70.

For mounting diverter valve 34 to tub rim 37 (See Figure 3), the upper portion of body 38 is passed through an aperture in the rim with ledge 52A firmly abutting the rim material surrounding the aperture, and holding nut 130 is threaded on threading 50 on the exterior body 38 and seated on the tub rim locking diverter valve into position. Canopy 132 covers threaded body portion 50 hiding nut 130.

With reference to Figures 4 and 5, when water enters inlet 40 through tube 66, check valve float 106 is elevated and the fluid passed through the end of tube 66 falling past spacers 128 to opening 72 in tube 70 and is diverted through one or the other of openings 42 or 44. When diversion of the fluid to the other opening is desired, tube 70 is rotated by rotating handle 120 until opening 72 is aligned with the other opening 44, sealing the other opening (See Figure 5).

While the tolerances between tube 70 and the inner side wall 56 of body 38 provide an intimate fit therebetween because of the precise machining of the parts, nevertheless, some water may pass between the two components and acts as a lubricant. However this water would be precluded from leaking from the valve by the appropriately positioned "0" rings and other seals.

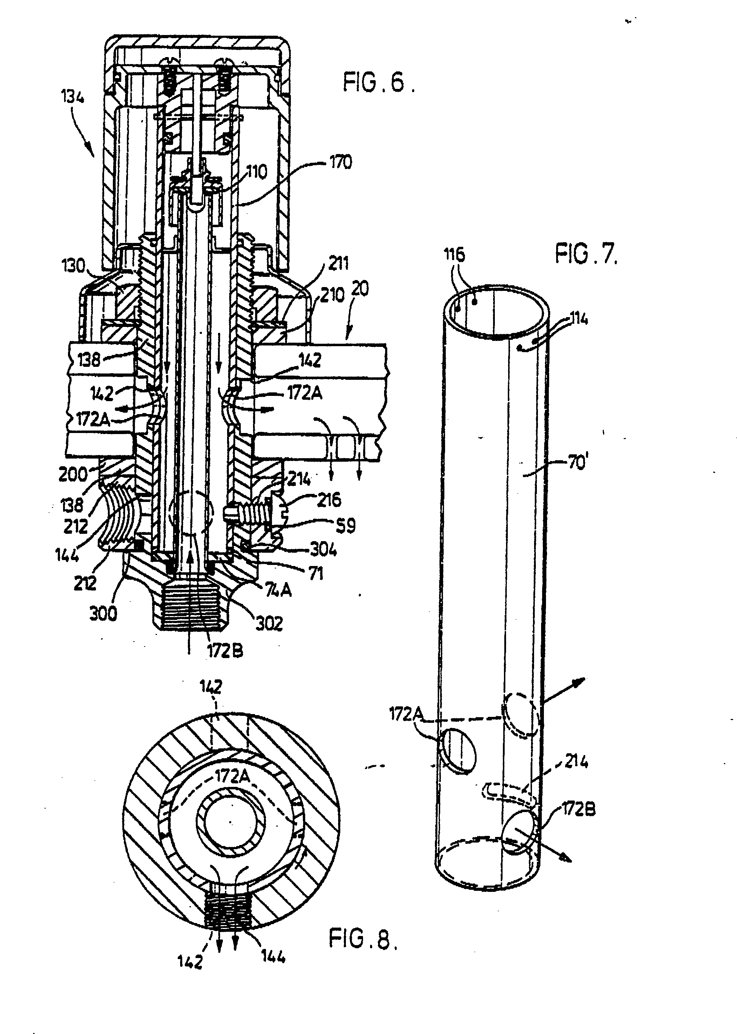

With reference to Figures 6, 7 and 8, diverter valve 134 with integral backflow preventer is constructed similar to valve 34 except that valve 134 is modified for use with bidet 20 shown in Figures 1 and 2 and comprises two sets of laterally directed openings 142 and 144 at two different vertically spaced levels in body 138, one set to be selectively aligned with one set of openings at a time of two different laterally directed sets of openings at two different levels 172A and 172B in tube 170 corresponding to the levels of openings 142 and 144. With reference to Figure 6, openings 142 would direct water to the rim of the bidet for discharge and opening 144 would direct water to spray 26.

Additionally body 138 has been modified to provide detachable annular ring portion 212 (carrying outlet 144 and aperture 215 through which aligning screw 216 is fastened to tube 170 in like manner as aligning screw 124), which sits on ledge 300 of bottom portion 302 of body 138. Washer 200 sits between the underside of the rim 35 of bidet 20 and the top of ring portion 212. Washer 210 and nut 211 sit between the top of rim 35 and nut 130. "O" ring 304 is secured in a recess in portion 212 preclude leakage. Once again other "O" rings are disposed in the valve as required to preclude leakage of water.

As many changes can be made to the embodiments of the invention without departing from the scope of the invention, it is intended that all matter contained herein be interpreted as illustrative of the invention and not in a limiting sense.

0117640

- 9 -

CLAIMS:

1.    A diverter valve with integral backflow preventer in the form of a vacuum breaker.

2.    A diverter valve with integral backflow preventer in the form of a vacuum breaker comprising a main housing or body, having an integral central chamber portion defined by an integral wall and, vertically directed openings at opposed ends of the housing or body through the housing or body into the central chamber portion, a plurality of laterally directed openings extending from the outer surfaces of the body through the internal wall of the body; opening into the chamber, an inlet tube in communication with the lowermost of the vertically directed openings and extending a predetermined distance from the lowermost vertically directed opening to an open end, means between the internal wall defining the chamber and the outer surface of the inlet for permitting communication between selected of such laterally directed openings and the inlet tube at a time, a closure reciprocal from a position spaced from the open end of the inlet tube closing the upper end of the diverter valve to the atmosphere, to a position closing the inlet tube opening the upper end of the diverter valve to atmosphere whereby when fluid is fed through the inlet tube into the valve, the closure is moved away from the end of the inlet tube closing the valve to atmosphere to permit the fluid to pass out the open end of the inlet tube into the valve, and when fluid is not passed through the inlet tube, the closure closes the open end of the inlet tube and vents the valve to atmosphere, control means for controlling the means between the internal wall defining the chamber and inlet tube for permitting the lateral selected communication to convey fluid to the desired opening for discharge and means for mounting the diverter valve with the integral backflow preventer.

3.    The diverter valve with integral backflow preventer in the form of a vacuum breaker of Claim 2, wherein the means permitting communication between selected of such laterally extending openings comprises a tube having an outer surface whose dimensions correspond substantially to the inner surface dimensions of the wall defining the chamber to provide an intimate close tolerance fit therebetween the tube having at least one laterally directed aperture therethrough for communication with only selected of such laterally directed openings in the housing or body at a time.

4.    The diverter valve with integral backflow preventer in the form of a vacuum breaker of Claim 3, wherein the internal wall defining the chamber portion is circular and of constant diameter, and the tube is cylindrical, in shape.

5.    The diverter valve with integral backflow preventer in the form of a vacuum breaker of Claim 4, wherein the tube is of greater length than the inlet tube and housing of the body of the valve.

6.    A diverter valve with integral backflow preventer in the form of a vacuum breaker comprising a main housing or body, having an integral central chamber portion defined by an internal wall and, vertically directed openings at opposed ends of the housing or body through the housing or body into the central chamber portion, a plurality of laterally directed openings extending from the outer surface of the body through the internal wall of the body, opening into the chamber, an inlet tube in communication with the lowermost of the vertically directed openings and extending a predetermined distance from the lowermost vertjcally directed opening to an opening, means between
the internal wall defining the chamber and the outer surface of the inlet
tube for permitting communication between selected of such laterally directed
openings and the inlet tube at a time, a closure reciprocal from a position
spaced from the opening in the inlet tube closing the upper end of the diverter
valve to the atmosphere, to a position closing the inlet tube opening the
upper end of the diverter valve to atmosphere whereby when fluid is fed through
the inlet tube into the valve the closure is moved away from the opening in
the inlet tube closing the valve to atmosphere to permit the fluid to pass
out the opening of the inlet tube into the valve, and when fluid is not passed
through the inlet tube, the closure closes the open end of the inlet tube and
vents the valve to atmosphere, control means for controlling the means between
the internal wall defining the chamber and inlet tube for permitting the lateral
selected communication to convey the fluid to the desired opening for discharge and means for counting the diverter valve with the integral backflow
preventer.

7.     The diverter valve with integral backflow preventer in the form of
a vacuum breaker of Claim 6, wherein the means permitting communication
between selected of such laterally extending openings may comprise a tube
having an outer surface whose dimensions correspond substantially to the
inner surface dimensions of the wall defining the chamber to provide an intimate close tolerance fit therebetween, the tube having at least one laterally
directed aperture therethrough for communication with only selected of such
laterally directed openings in the housing or body at a time.

- 12 -

8.    The diverter valve with integral backflow preventer  in the form of
a vacuum breaker of Claim 7, wherein the internal wall defining the chamber
is circular and of constant diameter, and the tube is cylindrical, in shape.

9.    The diverter valve with integral backflow preventer in the form of
a vacuum breaker of Claim 8, wherein the tube is of greater length than the
inlet and housing or body of the valve.

FIG.1.

FIG.2.

0117640

FIG.4.

FIG.5.

FIG.3.

0117640

FIG.6.

134

110    170

130

211
210    20

138

142    142

172A

172A

200

138
212

144

212

300

216

59

304

71

74A

302

172B

FIG.7.

116

114

70'

172A

214

172B

142

172A

142    144

FIG.8.

0117640

4/5

FIG.9.

FIG. 10.